# EUROPEAN PATENT APPLICATION

(11) **EP 3 960 502 A1**
(43) Date of publication of application: **02.03.2022**
(21) Application number: 20794315.0
(22) Date of filing: 03.04.2020
(51) Int. Cl.: B60C 11/03

(54) **PNEUMATIC TIRE**

(30) Priority: 26.04.2019 JP 2019086762
(71) Applicant: The Yokohama Rubber Co., Ltd., Tokyo 105-8685 (JP)
(72) Inventor: HARADA, Shunya, Hiratsuka-shi, Kanagawa 254-8601 (JP)
(74) Representative: Dilg, Haeusler, Schindelmann Patentanwaltsgesellschaft mbH
(86) International application number: PCT/JP2020/015415
(87) International publication number: WO 2020/217935

(57) **Abstract**

In a pneumatic tire (1), a plurality of first land portions (3A) are arrayed adjacent to each other in a tire circumferential direction, and a plurality of second land portions (3B) are arrayed adjacent to each other in the tire circumferential direction. Moreover, the first land portions (3A) and the second land portions (3B) are each arrayed in a staggered manner along a tire equatorial plane (CL). Additionally, the first land portions (3A) and the second land portions (3B) each include a plurality of through grooves (41) to (43) that extend through the land portions (3A), (3B) and open to the pair of inclined main grooves and a plurality of blocks defined by the through grooves (41) to (43).

## Description

### Technical Field

The invention relates to a pneumatic tire and particularly relates to a pneumatic tire that can provide improved wet performance and snow performance.

### Background Art

In recent years, there has been a demand for high wet performance, in addition to snow performance, for winter tires. A technology described in Patent Document 1 has been known as a pneumatic tire in the related art that addresses this problem.

### Citation List

### Patent Literature

Patent Document 1: JP 2015-81076 A

### Summary of Invention

### Technical Problem

An object of the invention is to provide a pneumatic tire that can provide improved wet performance and snow performance.

### Solution to Problem

To achieve the object described above, a pneumatic tire according to an embodiment of the invention includes: a plurality of first inclined main grooves that extend while inclining to one side with respect to a tire circumferential direction and open to a tire equatorial plane and a tire ground contact edge on the one side; a plurality of second inclined main grooves that extend while inclining to an other side with respect to the tire circumferential direction and open to the tire equatorial plane and a tire ground contact edge on the other side; a plurality of first land portions each defined by a pair of the first inclined main grooves adjacent to each other and by one of the second inclined main grooves, the plurality of first land portions extending from the tire equatorial plane to the tire ground contact edge on the one side; and a plurality of second land portions each defined by a pair of the second inclined main grooves adjacent to each other and by one of the first inclined main grooves, the plurality of second land portions extending from the tire equatorial plane to the tire ground contact edge on the other side. The plurality of first land portions are arrayed adjacent to each other in the tire circumferential direction, the plurality of second land portions are arrayed adjacent to each other in the tire circumferential direction, the first land portions and the second land portions are arrayed in a staggered manner along the tire equatorial plane, and each of the first land portions and the second land portions includes a plurality of through grooves that extend through the land portion and open to the pair of inclined main grooves and a plurality of blocks defined by the through grooves.

### Advantageous Effects of Invention

In a pneumatic tire according to an embodiment of the invention, (1) the first inclined main grooves and the second inclined main grooves extend from the tire ground contact edge to the tire equatorial plane, and thus the edge components of a tread portion increase and the braking on snow performance of the tire improves, and the drainage properties of the tread portion improve and the wet braking performance of the tire improves. Additionally, (2) the land portions extending from the tire equatorial plane to the tire ground contact edge are arrayed adjacent to each other in the tire circumferential direction, and, compared to a configuration in which a third land portion is disposed between the land portions, the arrangement efficiency of the inclined main grooves and the land portions is made appropriate, and the drainage properties and the rigidity in a ground contact region of the tire are made appropriate. Moreover, (3) the first land portions and the second land portions are arrayed in the staggered manner along the tire equatorial plane while inverting the longitudinal direction therebetween, and the snow traction performance and the braking on snow performance of the tire improve. These have the advantage of improving the snow performance and the wet performance of the tire.

### Brief Description of Drawings

FIG. 1 is a cross-sectional view in a tire meridian direction illustrating a pneumatic tire according to an embodiment of the invention.
FIG. 2 is a plan view illustrating a tread surface of the pneumatic tire illustrated in FIG. 1.
FIG. 3 is an explanatory diagram illustrating a land portion illustrated in FIG. 2.
FIG. 4 is an enlarged view illustrating a main portion of the pneumatic tire illustrated in FIG. 2.
FIG. 5 is an enlarged view illustrating a main portion of the pneumatic tire illustrated in FIG. 2.
FIG. 6 is a table showing the results of performance tests of pneumatic tires according to embodiments of the invention.
FIG. 7 is a plan view illustrating a tread portion of a pneumatic tire of Conventional Example.

### Description of Embodiments

Embodiments of the invention will be described in detail below with reference to the drawings. Note that embodiments of the invention are not limited to the embodiments. Additionally, constituents of the embodiments include constituents that are substitutable and are obviously substitutes while maintaining consistency with the embodiments of the invention. Additionally, a plurality of modified examples described in the embodiments can be combined in a discretionary manner within the scope apparent to one skilled in the art.

### Pneumatic Tire

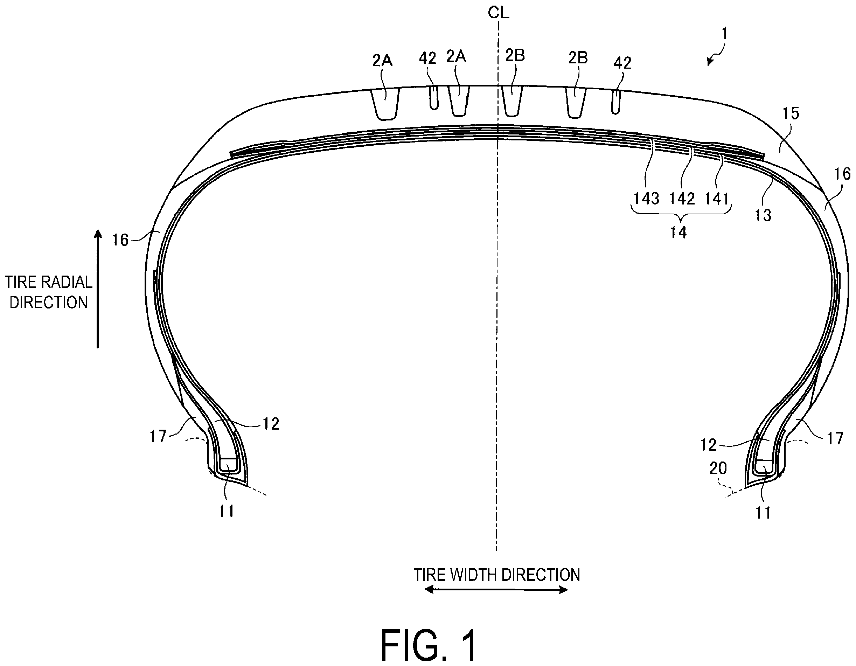

FIG. 1 is a cross-sectional view in a tire meridian direction illustrating a pneumatic tire according to an embodiment of the invention. The same drawing illustrates a cross-sectional view of a half region in a tire radial direction. The same drawing also illustrates a radial tire for a passenger vehicle as an example of a pneumatic tire.

In the same drawing, a cross-section in the tire meridian direction is defined as a cross-section of the tire taken along a plane that includes a tire rotation axis (not illustrated). Further, a tire equatorial plane CL is defined as a plane perpendicular to the tire rotation axis through a midpoint between measurement points in a tire cross-sectional width defined by JATMA. Additionally, a tire width direction is defined as a direction parallel to the tire rotation axis, and the tire radial direction is defined as a direction perpendicular to the tire rotation axis.

A pneumatic tire 1 has an annular structure with the tire rotation axis as its center and includes a pair of bead cores 11, 11, a pair of bead fillers 12, 12, a carcass layer 13, a belt layer 14, a tread rubber 15, a pair of sidewall rubbers 16, 16, and a pair of rim cushion rubbers 17, 17 (see FIG. 1).

The pair of bead cores 11, 11 each include one or more of bead wires made of steel and made by being wound annularly multiple times, and the pair of bead cores 11, 11 are embedded in bead portions and constitute cores of the bead portions of left and right. The pair of bead fillers 12, 12 are respectively disposed on an outer circumference of the pair of bead cores 11, 11 in the tire radial direction and reinforce the bead portions.

The carcass layer 13 includes a single layer structure made of one carcass ply, or a multilayer structure made of a plurality of carcass plies being layered, and the carcass layer 13 extends in a toroidal shape between the bead cores 11, 11 of left and right, and constitutes the backbone of the tire. Additionally, both end portions of the carcass layer 13 are wound and turned back toward an outer side in the tire width direction to wrap the bead cores 11 and the bead fillers 12, and are fixed. Moreover, the carcass ply of the carcass layer 13 is made by covering a plurality of carcass cords made of steel or an organic fiber material (for example, aramid, nylon, polyester, rayon, or the like) with coating rubber and performing a rolling process on the carcass cords, and has a cord angle (defined as an inclination angle in a longitudinal direction of the carcass cords with respect to a tire circumferential direction) of 80 degrees or more and 100 degrees or less.

The belt layer 14 is made of a plurality of belt plies 141 to 143 being layered, and is disposed around an outer circumference of the carcass layer 13. The belt plies 141 to 143 include a pair of cross belts 141, 142 and a belt cover 143.

The pair of cross belts 141, 142 are made by covering a plurality of belt cords made of steel or an organic fiber material with coating rubber and performing a rolling process on the belt cords, and each have a cord angle with an absolute value of 15 degrees or more and 55 degrees or less. Further, the pair of cross belts 141, 142 have cord angles (defined as inclination angles in a longitudinal direction of the belt cords with respect to the tire circumferential direction) of opposite signs relative to each other and are layered such that the longitudinal directions of the belt cords intersect each other (so-called crossply structure). Furthermore, the pair of cross belts 141, 142 are disposed layered on an outer side in the tire radial direction of the carcass layer 13.

The belt cover 143 is made by covering a belt cover cord made of steel or an organic fiber material with coating rubber and has a cord angle with an absolute value of 0 degrees or more and 10 degrees or less. Additionally, the belt cover 143 is, for example, a strip material made by covering one or a plurality of belt cover cords with coating rubber, and is formed by winding the strip material spirally multiple times on outer circumferential surfaces of the cross belts 141 and 142 in the tire circumferential direction.

The tread rubber 15 is disposed in the outer circumferences in the tire radial direction of the carcass layer 13 and the belt layer 14 and constitutes a tread portion of the tire. The pair of sidewall rubbers 16, 16 are disposed on an outer side in the tire width direction of the carcass layer 13 and constitute sidewall portions of left and right, respectively. The pair of rim cushion rubbers 17, 17 extend from an inner side in the tire radial direction of the bead cores 11, 11 of left and right and turned back portions of the carcass layer 13 toward the outer side in the tire width direction, and constitute rim fitting surfaces of the bead portions.

### Tread Pattern

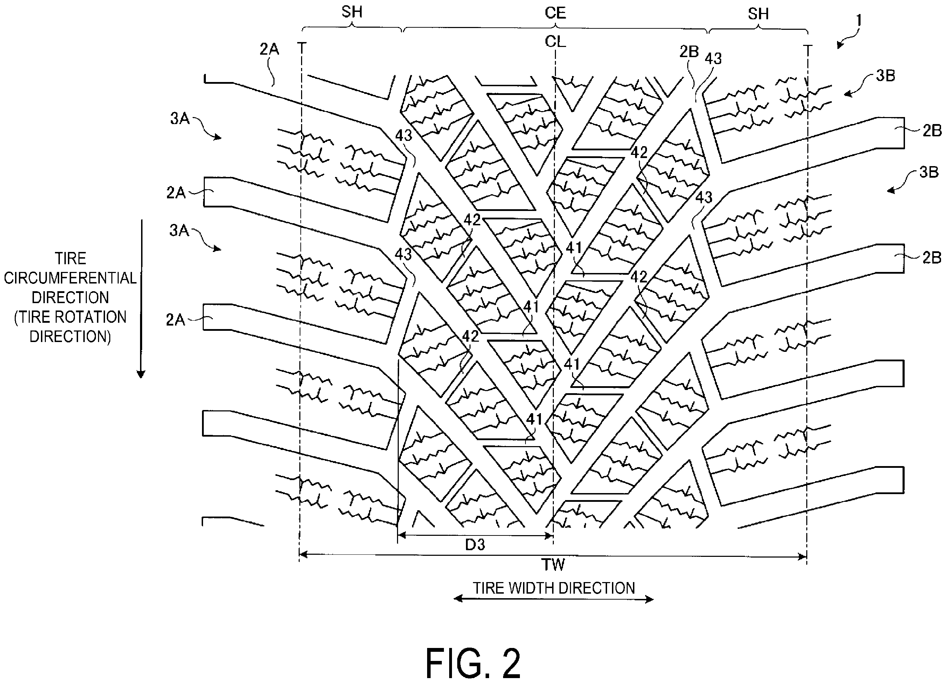

FIG. 2 is a plan view illustrating a tread surface of the pneumatic tire illustrated in FIG. 1. The same drawing illustrates a tread surface of a winter tire.

A tire rotation direction illustrated in FIG. 2 is defined as a rotation direction frequently used when the tire is in use and more specifically as a rotation direction when a vehicle advances. Furthermore, a ground contact leading side (so-called leading side or toe side) and a ground contact trailing side (so-called trailing side or heel side) of a block when the tire comes into contact with the ground are defined by the tire rotation direction. In addition, the pneumatic tire includes a rotation direction indicator portion (not illustrated) that indicates the tire rotation direction. The rotation direction indicator portion is formed, for example, of a mark or recesses/protrusions provided on the sidewall portion of the tire.

Further, a tire ground contact edge T is defined as a maximum width position in a tire axial direction of a contact surface between the tire and a flat plate when the tire is mounted on a specified rim, inflated to a specified internal pressure, placed vertically on the flat plate in a static state, and loaded with a load corresponding to a specified load.

Additionally, "specified rim" refers to an "applicable rim" defined by JATMA, a "Design Rim" defined by TRA, or a "Measuring Rim" defined by ETRTO. Additionally, "specified internal pressure" refers to a "maximum air pressure" defined by JATMA, to the maximum value in "TIRE LOAD LIMITS AT VARIOUS COLD INFLATION PRESSURES" defined by TRA, or to "INFLATION PRESSURES" defined by ETRTO. Additionally, "specified load" refers to a "maximum load capacity" defined by JATMA, the maximum value in "TIRE LOAD LIMITS AT VARIOUS COLD INFLATION PRESSURES" defined by TRA, or "LOAD CAPACITY" defined by ETRTO. However, in the case of JATMA, for a tire for a passenger vehicle, the specified internal pressure is an air pressure of 180 kPa, and the specified load is 88% of the maximum load capacity.

As illustrated in FIG. 2, the pneumatic tire 1 includes first and second inclined main grooves 2A, 2B and first and second land portions 3A, 3B, which are defined by the inclined main grooves 2A, 2B, respectively.

The first inclined main groove 2A extends while inclining to one side (left side in the drawings) with respect to the tire circumferential direction and opens to the tire equatorial plane CL and the tire ground contact edge T on the one side. Additionally, a plurality of the first inclined main grooves 2A are arrayed at predetermined intervals in the tire circumferential direction. The second inclined main groove 2B extends while inclining to the other side (right side in the drawings) with respect to the tire circumferential direction and opens to the tire equatorial plane CL and the tire ground contact edge T on the other side. Additionally, a plurality of the second inclined main grooves 2B are arrayed at predetermined intervals in the tire circumferential direction. Specifically, the first and second inclined main grooves 2A, 2B each incline from the tire equatorial plane CL toward the outer side in the tire width direction to an opposite side of the tire rotation direction (i.e., the ground contact trailing side). Moreover, the first and second inclined main grooves 2A, 2B each extend beyond the tire equatorial plane CL.

The first and second inclined main grooves 2A, 2B each are a groove on which a wear indicator must be provided as specified by JATMA and have a groove width of 2.5 mm or more and a groove depth of 6.5 mm or more (dimension symbols omitted in the drawings). In the configuration of FIG. 2, groove widths of the inclined main grooves 2A, 2B monotonically decrease from the tire ground contact edge T toward the tire equatorial plane CL, and are each smallest at an opening position with respect to another inclined main groove 2B or 2A, respectively. Additionally, the groove width of the inclined main groove 2A or 2B is smallest at a position where the inclined main groove 2A or 2B connects sideways with another inclined main groove 2B or 2A.

The groove width is measured as a distance between groove walls opposed to each other in a groove opening portion when the tire is mounted on a specified rim, inflated to a specified internal pressure, and in an unloaded state. In a configuration in which the groove opening portion includes a notch portion or a chamfered portion, the groove width is measured with intersection points between an extension line of the tread contact surface and extension lines of the groove walls as measurement points, in a cross-sectional view parallel with the groove width direction and the groove depth direction.

The groove depth is a distance from the tread contact surface to a maximum groove depth position and is measured when the tire is mounted on a specified rim, inflated to a specified internal pressure, and in an unloaded state. Additionally, in a configuration in which a groove bottom includes a partial recess/protrusion portion or a sipe, the groove depth is measured excluding the partial recess/protrusion portion or the sipe.

Also, one first inclined main groove 2A opens in a Y-shape to one second inclined main groove 2B, thus constituting one main groove unit (unit made of a pair of the inclined main grooves 2A, 2B; reference sign omitted in the drawings). Specifically, the first inclined main groove 2A connects sideways to the second inclined main groove 2B, and terminates without intersecting the second land portion 3B on an extension line of the groove center line. Additionally, the second inclined main groove 2B of the main groove unit opens in the Y-shape to the first inclined main groove 2A of another main groove unit adjacent in the tire rotation direction. Moreover, the second inclined main groove 2B connects sideways to the first land portion 3A, and terminates without intersecting the first land portion 3A on an extension line of the groove center line. Also, a plurality of the main groove units (2A, 2B) are repeatedly arrayed and connected in the tire circumferential direction. Accordingly, the first inclined main grooves 2A and the second inclined main grooves 2B are alternately connected in the Y-shape in the tire circumferential direction, forming a tread pattern in which a plurality of the inclined main grooves 22A, 2B are connected in the tire circumferential direction.

In the configuration described above, the inclined main grooves 2A, 2B are connected to each other in the Y-shape and arrayed in the tire circumferential direction without passing through long land portions 3A, 3B extending from the tire equatorial plane CL to the tire ground contact edge T as described above. Accordingly, the arrangement efficiency of the inclined main grooves 2A, 2B and the long land portions 3A, 3B is made appropriate, and the drainage properties and the rigidity in the ground contact region of the tire are made appropriate.

For example, in the configuration of FIG. 2, the first and second inclined main grooves 2A, 2B have a linear symmetrical structure centered on the tire equatorial plane CL, and are arrayed in a staggered manner in the tire circumferential direction. Additionally, the first and second inclined main grooves 2A, 2B have an arc shape that is gently curved or an L shape that is gently bent. Also, inclination angles of the first and second inclined main grooves 2A, 2B (dimension symbols omitted in the drawings) monotonically increase from the tire equatorial plane CL toward the outer side in the tire width direction. Accordingly, the drainage properties of the ground contact region of the tire are enhanced.

The inclination angles of the inclined main grooves 2A, 2B are each defined as an angle formed by the tangent line with respect to a groove center line of the inclined main groove and an opposite direction of the tire rotation direction. The groove center line of the inclined main groove is defined as a smooth curve connecting midpoints of the groove walls of left and right of the inclined main groove.

Additionally, in the configuration of FIG.2, at a position where the inclined main groove 2A or 2B on one side opens sideways in the Y-shape to the inclined main groove 2B or 2A on the other side, the land portion 3B or 3A on an extension line of the inclined main groove 2A or 2B on the one side does not have a notch portion at a position facing an opening portion of the inclined main groove 2A or 2B on the one side. Thus, a groove portion that is in the Y-shape as described above is formed in a connection portion of the inclined main grooves 2A, 2B rather than a groove portion that is in an X-shape. However, not limited to this, the second land portion 3B or 3A on the extension line of the inclined main groove 2A or 2B on the one side may have the notch portion at the position facing the opening portion of the inclined main groove 2A or 2B on the one side (not illustrated).

The first land portion 3A is defined by a pair of the first inclined main grooves 2A, 2A adjacent in the tire circumferential direction and one second inclined main groove 2B, and has a long structure extending from the tire equatorial plane CL to the tire ground contact edge T on one side (left side in the drawings). Additionally, a plurality of the first land portions 3A, 3A are arrayed adjacent to each other in the tire circumferential direction. Similarly, the second land portion 3B is defined by a pair of the second inclined main grooves 2B, 2B adjacent to each other in the tire circumferential direction and one first inclined main groove 2A, and has a long structure extending from the tire equatorial plane CL to the tire ground contact edge T on the other side (right side in the drawings). Additionally, a plurality of the second land portions 3B are arrayed adjacent to each other in the tire circumferential direction. Also, the first land portions 3A and the second land portions 3B are arrayed in a staggered manner along the tire equatorial plane CL while inverting the longitudinal direction therebetween.

For example, in the configuration of FIG. 2, the first and second land portions 3A, 3B have a linear symmetrical structure centered on the tire equatorial plane CL, and are arrayed in the staggered manner in the tire circumferential direction. Additionally, the first and second land portions 3A, 3B have a long shape that is gently curved or bent. Additionally, longitudinal directions of the first and second land portions 3A, 3B each incline from the tire equatorial plane CL toward the outer side in the tire width direction to an opposite side (i.e., the ground contact trailing side) in the tire rotation direction. Also, widths (dimension symbols omitted in the drawings) of the first and second land portions 3A, 3B monotonically increase from the tire equatorial plane CL toward the outer side in the tire width direction. Accordingly, the grounding characteristics of the tire are enhanced.

The width of the land portion 3A is defined as a width in a direction perpendicular to the longitudinal direction of the land portion 3A, that is, an extension direction of the inclined main groove 2A that defines the land portion 3A. The width of the land portion 3B is defined as a width in a direction perpendicular to the longitudinal direction of the land portion 3B, that is, an extension direction of the inclined main groove 2B that defines the land portion 3B.

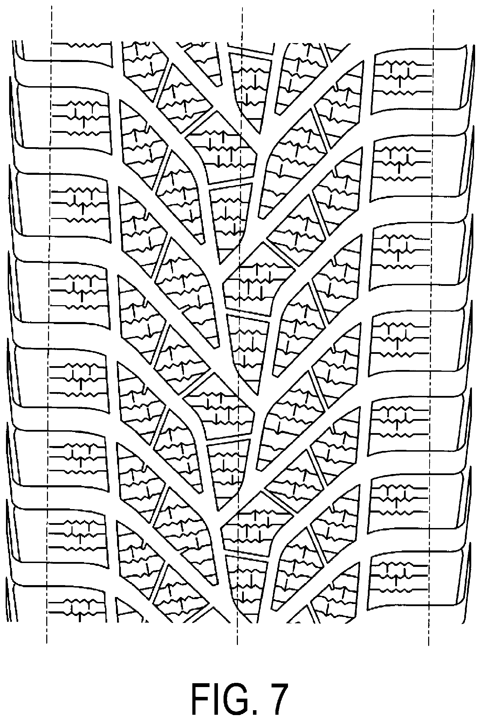

In the configuration described above, (1) the first inclined main groove 2A and the second inclined main groove 2B extend from the tire ground contact edge T to the tire equatorial plane CL, and thus the edge components of the tread portion improve and the braking on snow performance of the tire improves, and the drainage properties of the tread portion improve and the wet braking performance of the tire improves. Additionally, (2) the land portions 3A, 3B extend from the tire equatorial plane CL to the tire ground contact edge T and are arrayed adjacent to each other in the tire circumferential direction, and thus, compared to a configuration in which a third land portion is disposed between the land portions 3A, 3B (see, for example, FIG. 7), the arrangement efficiency of the inclined main grooves 2A, 2B and the land portions 3A, 3B is made appropriate, and the drainage properties and the rigidity in the ground contact region of the tire are made appropriate. Furthermore, (3) the first land portions 3A and the second land portions 3B are arrayed in a staggered manner along the tire equatorial plane CL while inversing the longitudinal direction therebetween, and thus the snow traction performance and the braking on snow performance of the tire improve. These improve the snow performance and the wet performance of the tire.

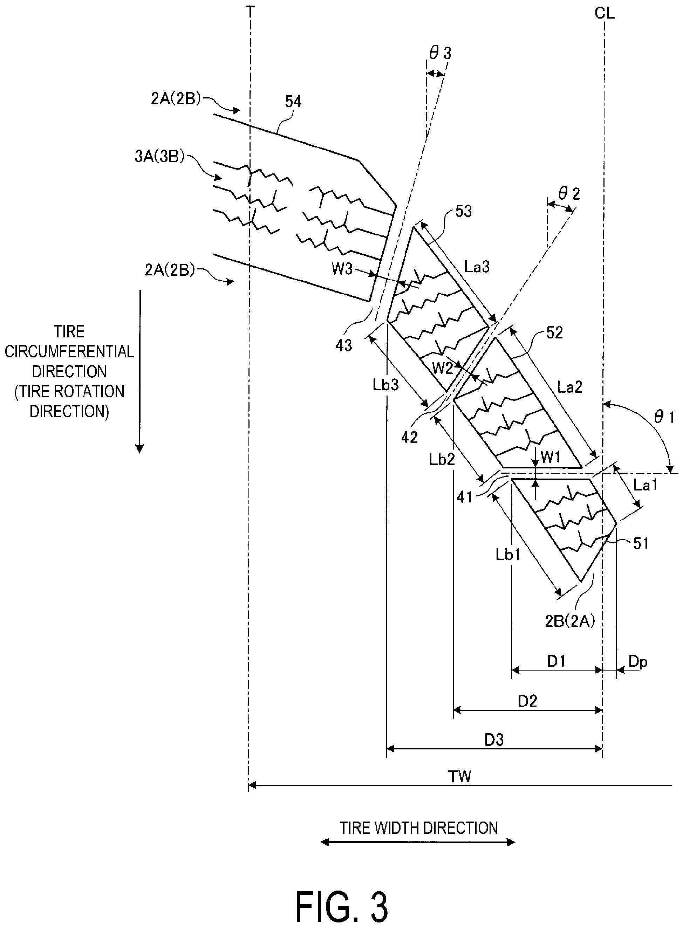

FIG. 3 is an explanatory diagram illustrating the land portion described in FIG. 2. The same drawing illustrates an enlarged view of a single land portion 3A (3B) extracted.

As illustrated in FIG. 3, one land portion 3A (3B) includes a plurality of through grooves 41 to 43 and a plurality of blocks 51 to 54 defined by the through grooves 41 to 43. Preferably, the number of through grooves in the one land portion 3A (3B) is 2 or more and 4 or less and the number of blocks therein is 3 or more and 5 or less.

The through grooves 41 to 43 have an open structure that extends through the land portion 3A (3B) and open to a pair of adjacent inclined main grooves 2A, 2A (2B, 2B). Additionally, the plurality of through grooves 41 to 43 are disposed at predetermined intervals in the longitudinal direction of the land portion 3A (3B).

Moreover, the through grooves 41 to 43 have groove widths W1 to W3, respectively, of 1.5 mm or more and groove depths (not illustrated) of 3.0 mm or more, and open when the tire comes into contact with the ground to function as a groove. Also, the groove widths W1 to W3 of the plurality of through grooves 41 to 43 have the relationship W1 ≤ W2 ≤ W3, and monotonically increase from an innermost through groove 41 closest to the tire equatorial plane CL toward the outer side in the tire width direction. In the configuration of FIG. 2, the groove width W1 of the innermost through groove 41 is the smallest and is in the range 1.5 mm ≤ W1 ≤ 2.5 mm. Moreover, the groove width W3 of an outermost through groove 43 on an outermost side in the tire width direction is the largest and is in the range 3.0 mm ≤ W3 ≤ 5.0 mm.

The through grooves 41 to 43 have inclination angles θ1 to θ3, respectively, of 10 degrees or more and 90 degrees or less, and incline toward the tire rotation direction to the outer side in the tire width direction. Also, the inclination angles θ1 to θ3 of the plurality of through grooves 41 to 43 have the relationship θ1 ≥ θ2 ≥ θ1, and monotonically decrease from the innermost through groove 41 toward the outer side in the tire width direction. In the configuration of FIG. 2, the inclination angle θ1 of the innermost through groove 41 with respect to the tire circumferential direction is in the range 80°≤ θ1 ≤ 90°. The inclination angle θ3 of the outermost through groove 43 is in the range 10° ≤ θ3 ≤ 30°. The inclination angle θ2 of the through groove 42 interposed between the innermost through groove 41 and the outermost through groove 43 is in the range 30° ≤ θ2 ≤ 50°.

The inclination angles θ1 to θ3 of the through grooves 41 to 43 are each measured as an angle formed by an imaginary straight line connecting opening portions of left and right, with respect to the inclined main grooves 2A, 2B, of the through grooves 41 to 43 and by the opposite direction of the tire rotation direction.

Additionally, in the configuration of FIG. 2, the plurality of the outermost through grooves 43 are arrayed in the tire circumferential direction, and the outermost through grooves 43 have the inclination angle θ3 described above, and thus the opening positions with respect to the inclined main groove 2A or 2B are mutually offset. Accordingly, circumferential grooves having a zigzag shape are formed by alternately connecting the outermost through grooves 43 and portions of the inclined main groove 2A or 2B in the tire circumferential direction.

The blocks 51 to 54 are defined by the plurality of the through grooves 41 to 43 and are arrayed in a row along the pair of the inclined main grooves 2A, 2A (2B, 2B) defining the land portions 3A (3B). In the configuration of FIG. 3, one land portion 3A (3B) includes four blocks 51 to 54. Additionally, the blocks 51 to 53 of a tread portion center region have a trapezoidal shape with edge portions on the sides of the pair of inclined main grooves 2A, 2A (2B, 2B) being substantially parallel opposite sides. Moreover, the innermost center block 51 closest to the tire equatorial plane CL has acute corner portions on the leading side in the tire rotation direction and on the outer side in the tire width direction.

A tread portion center region CE (see FIG. 2) is defined as a region on an inner side in the tire width direction, the region being demarcated by the outermost through grooves 43 on the outermost side in the tire width direction. Additionally, a tread portion shoulder region SH is defined as a region on the outer side in the tire width direction, the region being demarcated by the outermost through grooves 43.

Further, an innermost center block 51 closest to the tire equatorial plane CL is disposed on the tire equatorial plane CL. Additionally, a projection amount Dp (see FIG. 3) of the innermost center block 51 with respect to the tire equatorial plane CL preferably has the relationship 0 < Dp/TW ≤ 0.15 with respect to a tire ground contact width TW, and preferably has the relationship 0.01 ≤ Dp/TW ≤ 0.10. Also, the projection amount Dp of the innermost center block 51 is preferably in the range 0.5 mm ≤ Dp ≤ 5.0 mm, and is more preferably in the range 1.0 mm ≤ Dp ≤ 4.0 mm.

Moreover, in the center blocks 51 to 53 in the tread portion center region, distances D1 to D3 from the tire equatorial plane CL to corner portions of the center blocks 51 to 53, respectively, on the outer side in the tire width direction have the relationship D1 < D2 < D3, and increase from the innermost center block 51 closest to the tire equatorial plane CL toward the outer side in the tire width direction. The distance D1 of the corner portion of the innermost center block 51 has the relationship 0.10 ≤ D1/TW ≤ 0.15 with respect to the tire ground contact width TW. The distance D3 of the corner portion of the outermost center block 53 on the outermost side in the tire width direction has the relationship 0.22 ≤ D3/TW ≤ 0.35 with respect to the tire ground contact width TW.

Additionally, ground contact areas S1 to S3 of the center blocks 51 to 53, respectively, have the relationship S1 ≤ S2 ≤ S3, and monotonically increase from the innermost center block 51 toward the outer side in the tire width direction. A ratio S2/S1 of the ground contact areas of adjacent center blocks 51, 52 and a ratio S3/S2 of the ground contact areas of adjacent center blocks 52, 53 are preferably in the range of 1.01 or more and 1.50 or less, and more preferably in the range of 1.05 or more and 1.30 or less. A ratio S1/ΣSce of the ground contact area S1 of the innermost center block 51 to the sum ΣSce of the ground contact areas S1 to S3 of the center blocks 51 to 53 is in the range of 0.20 or more and 0.30 or less. A ratio S3/ΣSce of the ground contact area S3 of the outermost center block 53 to the sum ΣSce of the ground contact areas S1 to S3 of the center blocks 51 to 53 is in the range of 0.30 or more and 0.45 or less. In the configuration of FIG. 3, a ground contact area of a shoulder block 54 in the tread portion shoulder region is larger than the ground contact area of the outermost center block 53.

In the configuration described above, the edge components of a block in a region close to the tire equatorial plane CL are relatively large, and the snow traction properties of the ground contact region of the tire improve. On the other hand, the rigidity of the land portions 3A, 3B in a region close to the tire ground contact edge T increases, and the wet braking performance of the ground contact region of the tire improves. Accordingly, the snow performance and the wet performance of the tire are provided in a compatible manner.

Also, edge portions of the center blocks 51 to 53 defined by the pair of the inclined main grooves 2A, 2A (2B, 2B) include short edge portions having edge lengths La1 to La3 and long edge portions having edge lengths Lb1 to Lb3. Ratios La1/Lb1, La2/Lb2, La3/Lb3 have the relationship Lb1/La1 ≤ Lb2/La2 ≤ Lb3/La3 and monotonically increase from the innermost center block 51 toward the outer side in the tire width direction. Accordingly, the shapes of the center blocks 51 to 53 change from a substantially trapezoidal shape to a substantially parallelogram or a substantially rectangular shape as the center blocks range from the innermost center block 51 toward the outer side in the tire width direction. Additionally, the ratio La1/Lb1 of the edge lengths of the innermost center block 51 is in the range 0.30 ≤ La1/Lb1 ≤ 0.50. The ratio La3/Lb3 of the edge lengths of the outermost center block 53 is in the range 0.60 ≤ La3/Lb3 ≤ 0.90. Note that the edge lengths La1 to La3 are measured as linear distances of both end portions of the edge portions of the blocks 51 to 53, respectively.

In the configuration described above, the edge components of the blocks are relatively large in the region close to the tire equatorial plane CL, and the snow traction properties of the ground contact region of the tire improve. On the other hand, the rigidity of the land portions 3A, 3B increases in the region close to the tire ground contact edge T, and the wet braking performance of the ground contact region of the tire improves. Accordingly, the snow performance and the wet performance of the tire are provided in a compatible manner.

Note that the blocks 51 to 54 each have a plurality of sipes (reference sign omitted in the drawings). "Sipe" refers to a cut formed in a tread contact surface and has a sipe width of less than 1.5 mm and a sipe depth of 2.0 mm or greater, so that the sipe closes when the tire comes into contact with the ground.

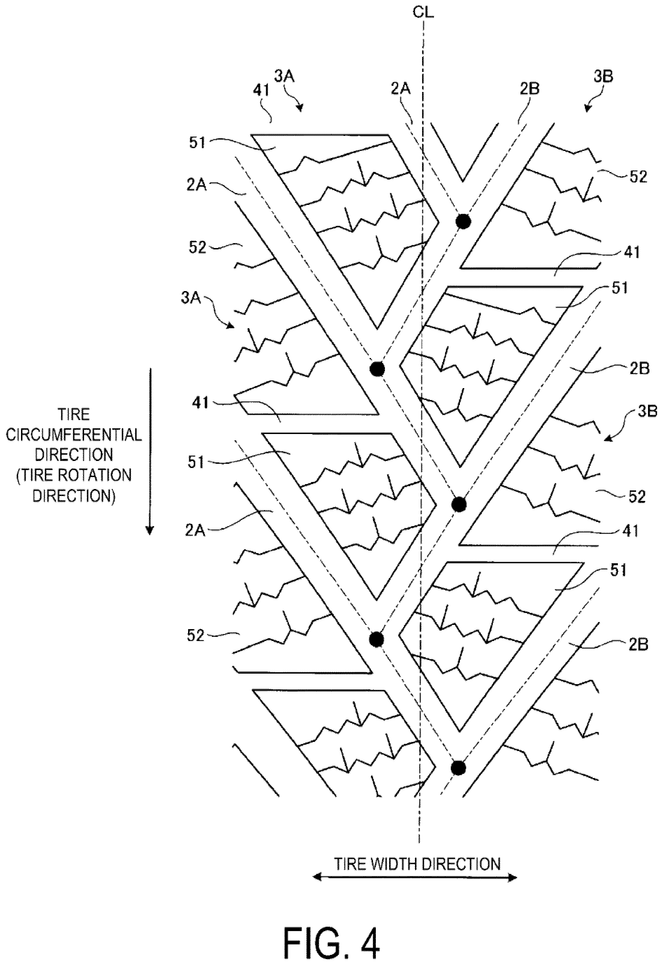

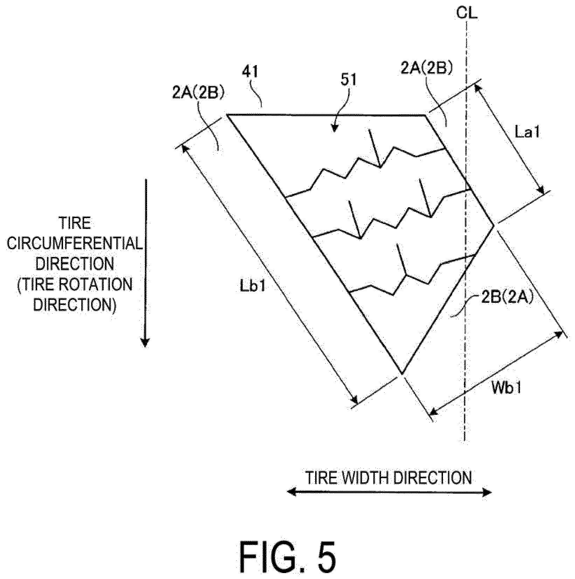

FIG. 4 and FIG. 5 are each an enlarged view illustrating a main portion of the pneumatic tire illustrated in FIG. 2. Of the drawings, FIG. 4 illustrates a configuration of the land portions 3A, 3B at or near the tire equatorial plane CL, and FIG. 5 illustrates a single block 51 closest to the tire equatorial plane CL.

In the configuration of FIG. 2, as described above, the first inclined main grooves 2A and the second inclined main grooves 2B extend beyond the tire equatorial plane CL, and the first inclined main grooves 2A and the second inclined main grooves 2B are alternately disposed in the tire circumferential direction and intersect each other in a Y-shape. Additionally, the first land portions 3A and the second land portions 3B are defined by the first inclined main grooves 2A and the second inclined main grooves 2B and are arrayed in a staggered manner along the tire equatorial plane CL.

In this configuration, as illustrated in FIG. 4, intersection points (reference sign omitted in the drawings) of groove center lines of the first inclined main grooves 2A and the second inclined main grooves 2B are arrayed in the staggered manner in the tire circumferential direction with the tire equatorial plane CL interposed therebetween. Accordingly, zigzagged main grooves made of portions of the first inclined main grooves 2A and the second inclined main grooves 2B are formed on the tire equatorial plane CL. Additionally, the innermost center blocks 51 of the first land portions 3A and the second land portions 3B have a road contact surface on the tire equatorial plane CL, and the innermost center blocks 51 of the first land portions 3A and the innermost center blocks 51 of the second land portions 3B are arrayed in the staggered manner in the tire circumferential direction with the tire equatorial plane CL interposed therebetween.

In addition, in FIG. 5, an aspect ratio Wb1/Lb1 of the innermost center block 51 is preferably in the range 1.50 ≤ Wb1/Lb1 ≤ 3.00, and more preferably in the range 1.80 ≤ Wb1/Lb1 ≤ 2.50. A dimension Lb1 is a maximum length of the block 51 in an extension direction of the inclined main groove 2A or 2B, and a dimension Wb1 is a maximum width of the block 51 in a direction orthogonal to the extension direction of the inclined main groove 2A or 2B.

As illustrated in FIG. 5, the innermost center block 51 has a trapezoidal shape, and has a long lower bottom side that is disposed toward the tire rotation direction and the outer side in the tire width direction. Additionally, the innermost communication groove 41 has the inclination angle θ1 (see FIG. 3) described above, and thus the edge portion on the trailing side of the innermost center block 51 is oriented in the direction normal to the tire circumferential direction. Accordingly, the snow traction performance of the tire is enhanced.

### Effect

As described above, the pneumatic tire 1 includes: the plurality of the first inclined main grooves 2A that extend while inclining to one side in the tire circumferential direction and open to the tire equatorial plane CL and to the tire ground contact edge T on the one side; the plurality of the second inclined main grooves 2B that extend while inclining to an other side in the tire circumferential direction and open to the tire equatorial plane CL and to the tire ground contact edge T on the other side; the plurality of the first land portions 3A that are defined by a pair of the first inclined main grooves 2A, 2A adjacent to each other and one second inclined main groove 2B, the plurality of the first land portions 3A extending from the tire equatorial plane CL to the tire ground contact edge T on one side; and the plurality of the second land portions 3B that are defined by a pair of the second inclined main grooves 2B, 2B adjacent to each other and one first inclined main groove 2A, the plurality of the second land portions 3B extending from the tire equatorial plane CL to the tire ground contact edge T on the other side (see FIG. 2). Additionally, the plurality of the first land portions 3A are arrayed adjacent to each other in the tire circumferential direction, and the plurality of the second land portions 3B are arrayed adjacent to each other in the tire circumferential direction. Moreover, the first land portions 3A and the second land portions 3B are arrayed in a staggered manner along the tire equatorial plane CL. Further, the first land portions 3A and the second land portions 3B each include the plurality of the through grooves 41 to 43 extending through the land portions 3A, 3B and opening to the pair of the inclined main grooves, and the plurality of blocks 51 to 54 (see FIG. 3) defined by the through grooves 41 to 43.

In such a configuration, (1) the first inclined main groove 2A and the second inclined main groove 2B extend from the tire ground contact edge T to the tire equatorial plane CL, and thus the edge components of the tread portion increase and the braking on snow performance of the tire improves, and the drainage properties of the tread portion improve and the wet braking performance of the tire improves. Additionally, (2) the land portions 3A, 3B extend from the tire equatorial plane CL to the tire ground contact edge T and are arrayed adjacent to each other in the tire circumferential direction, and thus, compared to a configuration in which a third land portion is disposed between the land portions 3A, 3B (see, for example, FIG. 7), the arrangement efficiency of the inclined main grooves 2A, 2B and the land portions 3A, 3B is made appropriate, and the drainage properties and the rigidity in the ground contact region of the tire are made appropriate. Moreover, (3) the first land portions 3A and the second land portions 3B are arrayed in the staggered manner along the tire equatorial plane CL while inversing the longitudinal direction therebetween, and thus the snow traction performance and the braking on snow performance of the tire improve. These have the advantage of improving the snow performance and the wet performance of the tire.

Additionally, in the pneumatic tire 1, one first inclined main groove 2A opens in the Y-shape with respect to one second inclined main groove 2B to form one main groove unit (see FIG. 2). The second inclined main groove 2B of the main groove unit opens in the Y-shape with respect to the first inclined main groove 2A of another main groove unit adjacent in the tire circumferential direction. The plurality of the main groove units are arrayed in the tire circumferential direction. In such a configuration, the inclined main grooves 2A, 2B are connected to each other without extending through the land portions 3A, 3B that extend from the tire equatorial plane CL to the tire ground contact edge T. This has the advantage that the arrangement efficiency of the inclined main grooves 2A, 2B and the land portions 3A, 3B is made appropriate, and the drainage properties and the rigidity of the ground contact region of the tire are made appropriate.

Additionally, in the pneumatic tire 1, the first land portions 3A and the second land portions 3B each include two or more and four or less of the through grooves 41 to 43, and three or more and five or less of the blocks 51 to 54 (see FIG. 3). This has the advantage that the number of through grooves 41 to 43 and blocks 51 to 54 is made appropriate and the drainage properties and the rigidity in the ground contact region of the tire are made appropriate.

Moreover, in the pneumatic tire 1, the groove widths of the through grooves 41 to 43 monotonically increase (W1 ≤ W2 ≤ W3) from the through grooves 41 to 43 closest to the tire equatorial plane CL toward the outer side in the tire width direction (see FIG. 3). This has the advantage of providing the drainage properties and the rigidity of the ground contact region of the tire in a compatible manner.

Further, in the pneumatic tire 1, the inclination angles θ1 to θ3 of the through grooves 41 to 43, respectively, with respect to the tire circumferential direction monotonically decrease (θ1 ≥ θ2 ≥ θ1) from the through groove 41 closest to the tire equatorial plane CL toward the outer side in the tire width direction. (FIG. 3). This has the advantage of providing the drainage properties and the snow traction properties of the ground contact region of the tire in a compatible manner.

Also, in the pneumatic tire 1, the through grooves 41 to 43 include the innermost through groove 41 closest to the tire equatorial plane CL, and the inclination angle θ1 of the innermost through groove 41 with respect to the tire circumferential direction is in the range of 80 degrees or more and 90 degrees or less. This has the advantage of improving the snow traction properties of the tread portion center region.

Moreover, the pneumatic tire 1 includes an indicator portion (not illustrated) indicating the tire rotation direction. Of the through grooves 41 to 43, the outermost through groove 43 on the outermost side in the tire width direction inclines toward the tire rotation direction to the outer side in the tire width direction (see FIG. 2). This has the advantage of improving the snow traction properties of the ground contact region of the tire.

Additionally, in the pneumatic tire 1, the center blocks 51 to 53 are defined as the blocks 51 to 53 that are in the tread portion center region, and a ratio S1/(S1 + S2 + S3) of the ground contact area S1 of the innermost center block 51 closest to the tire equatorial plane CL to the sum of the ground contact areas S1 to S3 of the center blocks 51 to 53 is in the range of 0.20 or more and 0.30 or less. This has the advantage that the ground contact area S1 of the innermost center block 51 is properly secured.

Moreover, in the pneumatic tire 1, the ground contact areas S1 to S3 (dimension symbols omitted in the drawings) of the center blocks 51 to 53 monotonically increase (S1 ≤ S2 ≤ S3) from the ground contact area of the innermost center block 51 toward the outer side in the tire width direction (see FIG. 3). In such a configuration, the edge components of a block in a region close to the tire equatorial plane CL are relatively large, and the snow traction properties of the ground contact region of the tire improve. On the other hand, the rigidity of the land portions 3A, 3B in a region close to the tire ground contact edge T increases, and the wet braking performance of the ground contact region of the tire improves. This has the advantage of providing the snow performance and the wet performance of the tire in a compatible manner.

Also, in the pneumatic tire 1, the ground contact area ratios S2/S1, S3/S2 of the adjacent center blocks 51, 52 and 52, 53, respectively, are in the range of 1.01 or more and 1.50 or less. This has the advantage that the ground contact area ratios of the center blocks 51 to 53 are made appropriate.

In the pneumatic tire 1, of the blocks 51 to 54, the innermost center block 51 closest to the tire equatorial plane CL has the short edge portion and the long edge portion on the sides facing the inclined main grooves 2A or 2B. The ratio La1/Lb1 of the edge length La1 of the short edge portion and the edge length Lb1 of the long edge portion is in a range of 0.30 or more and 0.50 or less. This has the advantage that the edge length of the innermost center block 51 is made appropriate.

Additionally, in the pneumatic tire 1, of the blocks 51 to 53, the center blocks 51 to 53 in the tread portion center region are defined, and each have the short edge portion and the long edge portion on the sides facing the inclined main grooves 2A or 2B. The ratios La1/Lb1, La2/L2, La3/Lb3 of the edge lengths La1 to La3 of the short edge portions and the edge lengths Lb1 to Lb3 of the long edge portions monotonically increase from the center block 51 closest to the tire equatorial plane CL toward the outer side in the tire width direction (Lb1/La1 ≤ Lb2/La2 ≤ Lb3/La3) (see FIG. 3). In such a configuration, the shapes of the center blocks 51 to 53 change from a substantially trapezoidal shape to a substantially rectangular or a substantially parallelogram shape as the center blocks range from the innermost center block 51 toward the outer side in the tire width direction. In such a configuration, the edge components of a block in a region close to the tire equatorial plane CL are relatively large, and the snow traction properties of the ground contact region of the tire improve. On the other hand, the rigidity of the land portions 3A, 3B in a region close to the tire ground contact edge T increases, and the wet braking performance of the ground contact region of the tire improves. This has the advantage of providing the snow performance and the wet performance of the tire in a compatible manner.

Additionally, in the pneumatic tire 1, a projection amount Dp of the innermost center block 51 with respect to the tire equatorial plane CL has the relationship 0 < Dp/TW ≤ 0.15 with respect to the tire ground contact width TW. This has the advantage of making the rigidity balance of the innermost center block 51 appropriate, providing the snow performance and the wet performance of the tire in a compatible manner.

Moreover, in the pneumatic tire 1, the distance D1 (see FIG. 3) from the end portion of the innermost center block 51 on the outer side in the tire width direction to the tire equatorial plane CL has the relationship 0.10 ≤ D1/TW ≤ 0.15 with respect to the tire ground contact width TW (see FIG. 2). This has the advantage of making the rigidity balance of the innermost center block 51 appropriate, providing the snow performance and the wet performance of the tire in a compatible manner.

Also, in the pneumatic tire 1, of the blocks 51 to 53 in the tread portion center region, the outermost center block 53 on the outermost side in the tire width direction is defined, and the distance D3 from an end portion of the outermost center block 53 on the outer side in the tire width direction to the tire equatorial plane CL has the relationship 0.22 ≤ D3/TW ≤ 0.35 with respect to the tire ground contact width TW. This has the advantage of making the rigidity balance of the outermost center block 53 appropriate, providing the snow performance and the wet performance of the tire in a compatible manner.

### Examples

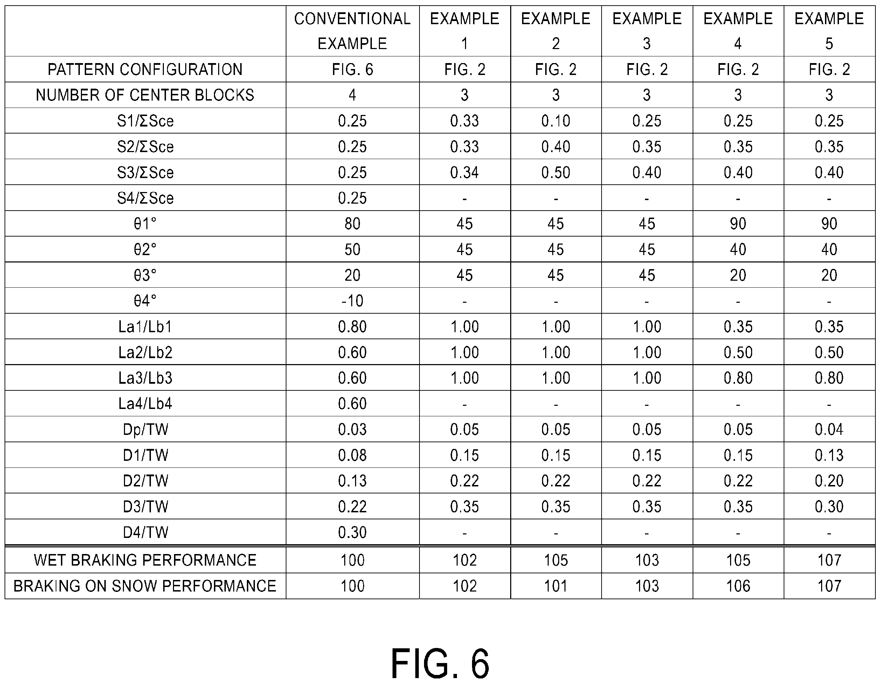

FIG. 6 is a table indicating the results of performance tests of pneumatic tires according to embodiments of the invention. FIG. 7 is a plan view illustrating a tread portion of a pneumatic tire of Conventional Example.

In the performance tests, (1) wet braking performance and (2) braking on snow performance were evaluated for a plurality of types of test tires. Also, test tires having a tire size of 205/55R16 91H were assembled on a rim having a rim size of 16×6.5J, and an internal pressure of 200 kPa and a load specified by JATMA were applied to the test tires. Further, the test tires were mounted on a test vehicle, a front-engine front-drive (FF) passenger vehicle with an engine displacement of 1500 cc.

(1) In the evaluation relating to braking on snow performance, the test vehicle was driven on a snowy road surface of a snowy road test site and the braking distance at a traveling speed of 40 km/h was measured. The measurement results are expressed as index values and evaluated with Conventional Example being assigned as the reference (100). In this evaluation, larger values are preferable.
(2) In the evaluation relating to wet braking performance, the test vehicle was driven on an asphalt road covered with 1 mm of water and the braking distance at a traveling speed of 85 km/h was measured. The measurement results are expressed as index values and evaluated with Conventional Example being assigned as the reference (100). In this evaluation, larger values are preferable.

The test tires of Examples are provided with the configurations of FIG. 1 and FIG. 2, and long land portions 3A, 3B extending from the tire equatorial plane CL to the tire ground contact edge T are disposed adjacent to each other in the tire circumferential direction, and are arrayed in a staggered manner along the tire equatorial plane CL. Moreover, the inclined main grooves 2A, 2B have a groove width of 5.0 mm and a groove depth of 8.5 mm. Additionally, the two through grooves 41, 42 on the side of the tire equatorial plane CL have a groove width of 2.0 mm and a groove depth of 4.5 mm, and the through groove 43 on the outermost side has a groove width of 4.5 mm and a groove depth of 6.5 mm. Further, the tire ground contact width TW is 160 mm.

The test tire of Conventional Example has the configuration of FIG. 7, and differs from the test tires of Examples, in particular, in that short land portions that do not extend to the tire equatorial plane CL are inserted between adjacent long land portions, and in that the land portions include four communication grooves (having inclination angles of θ1 to θ4) and four center blocks (having ground contact areas S1 to S4).

As can be seen from the test results, braking on snow performance and wet braking performance of the tire improve in the test tires of Examples, compared to the test tire of Conventional Example.

### Reference Signs List

1 Pneumatic tire
11 Bead core
12 Bead filler
13 Carcass layer
14 Belt layer
141, 142 Cross belt
142 Belt cover
15 Tread rubber
16 Sidewall rubber
17 Rim cushion rubber
2A, 2B Inclined main groove
3A, 3B Land portion
41 to 43 Through groove
51 to 53 Center block
54 Shoulder block

## Claims

1. A pneumatic tire, comprising:
a plurality of first inclined main grooves that extend while inclining to one side with respect to a tire circumferential direction and open to a tire equatorial plane and a tire ground contact edge on the one side;
a plurality of second inclined main grooves that extend while inclining to an other side in the tire circumferential direction and open to the tire equatorial plane and a tire ground contact edge on the other side;
a plurality of first land portions that are defined by a pair of the first inclined main grooves adjacent to each other and by one of the second inclined main grooves, the plurality of first land portions extending from the tire equatorial plane to the tire ground contact edge on the one side; and
a plurality of second land portions that are defined by a pair of the second inclined main grooves adjacent to each other and by one of the first inclined main grooves, the plurality of second land portions extending from the tire equatorial plane to the tire ground contact edge on the other side,
the plurality of first land portions being arrayed adjacent to each other in the tire circumferential direction,
the plurality of second land portions being arrayed adjacent to each other in the tire circumferential direction,
the first land portions and the second land portions being arrayed in a staggered manner along the tire equatorial plane, and
the first land portions and the second land portions each comprising a plurality of through grooves that extend through the land portion and open to the pair of inclined main grooves, and a plurality of blocks defined by the through grooves.

2. A pneumatic tire according to claim 1, wherein
one of the first inclined main grooves opens in a Y-shape to one of the second inclined main grooves and forms one main groove unit,
the second inclined main groove of the main groove unit opens in the Y-shape to the first inclined main groove of another main groove unit adjacent in the tire circumferential direction, and
a plurality of the main groove units are arrayed in the tire circumferential direction.

3. A pneumatic tire according to claim 1 or 2, wherein the first land portion and the second land portion each comprise two or more and four or less of the through grooves and three or more and five or less of the blocks.

4. A pneumatic tire according to any one of claims 1 to 3, wherein groove widths of the through grooves monotonically increase from the through groove closest to the tire equatorial plane toward an outer side in a tire width direction.

5. A pneumatic tire according to any one of claims 1 to 4, wherein inclination angles of the through grooves with respect to the tire circumferential direction monotonically decrease from the through groove closest to the tire equatorial plane toward the outer side in the tire width direction.

6. A pneumatic tire according to any one of claims 1 to 5, wherein, of the through grooves, an innermost through groove closest to the tire equatorial plane has an inclination angle with respect to the tire circumferential direction, the inclination angle being in a range of 80 degrees or more and 90 degrees or less.

7. A pneumatic tire according to any one of claims 1 to 6, wherein
an indicator portion indicating a tire rotation direction is provided, and
of the through grooves, an outermost through groove on an outermost side in the tire width direction inclines toward the tire rotation direction to the outer side in the tire width direction.

8. A pneumatic tire according to any one of claims 1 to 7, wherein
of the blocks, center blocks in a tread portion center region are defined, and
a ratio of a ground contact area of an innermost center block closest to the tire equatorial plane to a sum of ground contact areas of the center blocks is in a range of 0.20 or more and 0.30 or less.

9. A pneumatic tire according to claim 8, wherein the ground contact areas of the center blocks monotonically increase from the ground contact area of the innermost center block toward the outer side in the tire width direction.

10. A pneumatic tire according to claim 8 or 9, wherein a ratio of the ground contact areas of the center blocks adjacent to each other is in a range of 1.01 or more and 1.50 or less.

11. A pneumatic tire according to any one of claims 1 to 10, wherein
of the blocks, the innermost center block closest to the tire equatorial plane is defined, and
the innermost center block has a short edge portion and a long edge portion on sides facing the inclined main grooves, a ratio of an edge length of the short edge portion and an edge length of the long edge portion being in a range of 0.30 or more and 0.50 or less.

12. A pneumatic tire according to any one of claims 1 to 11, wherein
of the blocks, the center blocks in the tread portion center region are defined, and
the center blocks each have a short edge portion and a long edge portion on sides facing the inclined main grooves, a ratio of an edge length of the short edge portion and an edge length of the long edge portion monotonically increasing from the center block closest to the tire equatorial plane toward the outer side in the tire width direction.

13. A pneumatic tire according to any one of claims 1 to 12, wherein
of the blocks, the innermost center block closest to the tire equatorial plane is defined, and
a projection amount Dp of the innermost center block with respect to the tire equatorial plane has a relationship 0 < Dp/TW ≤ 0.15 with respect to a tire ground contact width TW.

14. A pneumatic tire according to any one of claims 1 to 13, wherein
of the blocks, the innermost center block closest to the tire equatorial plane is defined, and
a distance D1 from an end portion of the innermost center block on the outer side in the tire width direction to the tire equatorial plane has a relationship 0.10 ≤ D1/TW ≤ 0.15 with respect to the tire ground contact width TW.

15. A pneumatic tire according to any one of claims 1 to 14, wherein
of the blocks in the tread portion center region, the outermost center block on an outermost side in the tire width direction is defined, and
a distance D3 from an end portion of the outermost center block on the outer side in the tire width direction to the tire equatorial plane has a relationship 0.22 ≤ D3/TW ≤ 0.35 with respect to the tire ground contact width TW.
